# EUROPÄISCHE PATENTSCHRIFT

(11) **EP 1 015 169 B1**
(45) Veröffentlichungstag und Bekanntmachung des Hinweises auf die Patenterteilung: **22.05.2002**
(21) Anmeldenummer: 98951278.5
(22) Anmeldetag: 09.09.1998
(51) Int. Cl.: B23K 37/02, B25J 9/02, G05B 19/423

(54) **SCHWEISSAUTOMAT**
AUTOMATIC WELDING MACHINE
MACHINE DE SOUDAGE AUTOMATIQUE

(30) Priorität: 10.09.1997 DE 19739720
(43) Veröffentlichungstag der Anmeldung: 05.07.2000
(73) Patentinhaber: Roman Eissfeller GmbH, 78194 Immendingen (DE)
(72) Erfinder: EISSFELLER, Roman, D-78194 Immendingen (DE)
(74) Vertreter: Patentanwälte Westphal, Mussgnug & Partner
(86) Internationale Anmeldenummer: DE9802660
(87) Internationale Veröffentlichungsnummer: WO9912696

(56) Entgegenhaltungen:
- EP-A- 0 701 884
- EP-A- 0 850 730
- PATENT ABSTRACTS OF JAPAN vol. 095, no. 007, 31. August 1995 & JP 07 108475 A (TAKAGI IND CO LTD), 25. April 1995
- PATENT ABSTRACTS OF JAPAN vol. 010, no. 009 (P-420), 14. Januar 1986 & JP 60 164813 A (MITSUBISHI JUKOGYO KK), 27. August 1985

## Beschreibung

Die Erfindung betrifft einen Schweißautomaten mit einer Grundplatte zur Ablage von zu schweißenden Werkstücken und mit einem in A-B-C-Richtung bewegbaren Schweißkopf einer Schweißvorrichtung, wobei der Schweißkopf an einen X-Y-Z-Bewegungsmechanismus gekoppelt ist zur selbsttätigen Bewegung des Schweißkopfes entlang der Werkstücke nach Maßgabe einer in einer Steuereinrichtung gespeicherten und durch einen vorausgegangen Einlernprozeß ("Teach-In") vorgegebenen Steuerroutine, und wobei der X-Y-Z-Bewegungsmechanismus drei von jeweils einem Motor antreibbare Linearbewegungseinrichtungen aufweist.

Schweißautomaten sind allgemein bekannt und dienen dazu, nach einem vorgegebenen Programm Schweißvorgänge an Werkstücken selbsttätig durchzuführen. Unter einem Schweißautomat versteht man in der Regel die Zusammenfassung aller notwendigen Einrichtungen zur serienmäßigen Herstellung von Schweißungen an industriellen Erzeugnissen. Die Schweißautomaten umfassen insbesondere Spann- und Justier-Einrichtungen für die Werkstücke oder die Schweißwerkzeuge sowie Einrichtungen zur Führung der Schweißelektroden bzw. Schweißbrenner beim Gasschmelzschweißen und notwendiger Zusatzwerkstoffe. Die Steuerung des Schweißautomatens befindet sich häufig außerhalb des Schweißautomatens und ist als getrennte Einheit ausgeführt. Mittlerweile sind auch Schweißautomaten bekannt, bei denen eine Bedieneinheit am Schweißautomat selbst vorgesehen ist.

Sämtlichen Schweißautomaten ist gemeinsam, daß zumindest die Führung der Schweißelektroden bzw. Schweißbrenner nach einer vorgegebenen Steuerroutine selbsttätig erfolgt. Aufgrund der sehr guten Schweißergebnisse mit Schweißautomaten im Vergleich zu dem manuellen Schweißen besteht mittlerweile die Tendenz - soweit möglich - Schweißautomaten nicht nur beim Schweißvorgang von Großteilen, wie z. B. Transferstraßen in den Karosseriewerken der Automobilfabriken, einzusetzen, sondern auch bei kleineren Werkstücken.

Besonders groß ist das Bedürfnis für solche Schweißautomaten dort, wo es auf sehr präzise Schweißnähte und eine hohe Reproduzierbarkeit der Schweißvorgänge ankommt. Schweißautomaten sind deshalb insbesondere dort notwendig, wo ein langsames Präzisionsschweißen erforderlich ist.

Aus EP 0 701 884 A1 der Anmelderin ist bereits ein Industrieroboter bekannt mit einem beweglichen Arbeitsarm zum Handhaben von Werkstücken und einen den Arbeitsarm bewegenden Mechanismus. Der Mechanismus verfügt über drei Linearbewegungseinrichtungen, durch welche der Arbeitsarm in X-Y-Z-Richtung bewegbar ist. Durch das "vorsehen dreier solcher Linearbewegungseinrichtungen ist es in einfacher Weise möglich, den Arbeitsarm zu einer vorgegebenen Position zu führen. Die Linearbewegungseinrichtungen können hierbei, je nach anzufahrenden Punkt, völlig unabhängig voneinander in ihre Bewegungsrichtungen bewegt werden. Neben einem X-Y-Z-Bewegungsmechanismus ist der Arbeitsarm selbst mit einer Bewegungseinrichtung versehen, so daß dieser unabhängig von de X-Y-Z-Bewegungseinrichtung hin und her bewegt bzw. gedreht werden kann. An jede der Bewegungs- bzw. Linearbewegungseinrichtungen des Industrieroboters ist eine Sensoreinrichtung in Form eines Drehgebers gekoppelt. Diese mit der Steuereinrichtung gekoppelten Sensoreinrichtungen dienen zur Bewegungserfassung der jeweiligen Bewegungs-bzw. Linearbewegungseinrichtungen und damit auch zur Positionserfassung des Arbeitsarmes. Im abgekoppelten Zustand befinden sich die Bewegungseinrichtungen und Linearbewegungseinrichtungen in einem Gleichgewicht und können von Hand ohne größeren Kraftaufwand bewegt werden. Dies wird zusammen mit den vorgesehenen Sensoreinrichtungen zur Programmierung der Steuereinrichtung ausgenutzt. Dabei wird ein sogenannter "Teach-In-Prozeß" durchgeführt.

Bezüglich des Einlernprozesses wird ausdrücklich auf die EP 0 701 884 A1 zum Zwecke der Offenbarung Bezug genommen. Der dort beschriebene Industrieroboter ist zwar grundsätzlich dazu geeignet, auch Schweißvorgänge an Werkstücken durchzuführen. Problematisch ist bei dem bekannten Industrieroboter jedoch die Tatsache, daß ein sehr langsames Präzisionsschweißen nicht ohne weiteres möglich, weil bei dem Einlernprozeß die Bedienperson selbst sehr exakt arbeiten muß bei gleichzeitiger Bewegung der X-Y-Z-Bewegungseinrichtung sowie der an den Arbeitskopf selbst angekoppelten Bewegungseinrichtung.

Die Erfindung hat deshalb das Ziel, einen Schweißautomaten zu schaffen, der ein hochpräzises Schweißen von Werkstücken nach Maßgabe eines zuvor durchgeführten Einlernprozesses erlaubt.

Dieses Ziel wird durch einen Schweißautomaten mit den Merkmalen des Anspruchs 1 gelöst.

Die Erfindung beruht als im Wesentlichen darauf, die Motoren der X-Y-Z-Bewegungsmechanismus jeweils mit einem Selbsthemmgetriebe auszustatten. Der X-Y-Z-Bewegungsmechanismus ist damit von Hand nicht bewegbar. Der X-Y-Z-Bewegungsmechanismus verfügt über einen Handgriff mit integrierten Sensoren und ist als eine Art Steuerknüppel für die Bedienperson gedacht.

Der Handgriff ist hierbei vorzugsweise so gestaltet, daß er der Bedienperson den Eindruck verleiht, selbst den X-Y-Z-Bewegungsmechanismus in der Hand zu halten, also einen Teil dieses Bewegungsmechanismus bildet. Zweckmäßigerweise ist der Handgriff am vorderen Ende eines Halterohres, das auf der Z-Achse sitzt, plaziert. Die Sensoren innerhalb des Handgriffes sind an eine Steuereinrichtung gekoppelt, wobei die Motoren den X-Y-Z-Bewegungsmechanismus ausschließlich nach Maßgabe von Ausgangssignalen der Sensoren bewegen.

In einer Weiterbildung der Erfindung ist der X-Y-Z-Bewegungsmechanismus mit einer Kupplungseinrichtung versehen, die bei Entkopplung dennoch eine Handverfahrung des X-Y-Z-Bewegungsmechanismusses erlaubt. Eine solche Weiterbildung ist sinnvoll, wenn aufgrund eines Defektes des X-Y-Z-Bewegungsmechanismusses dieser nicht mehr elektrisch angetrieben werden kann und dennoch aus seiner augenblicklichen Lage verfahren werden soll. In diesem Fall wird der Kopplungsmechanismus entkoppelt und der X-Y-Z-Bewegungsmechanismus von Hand verfahren. Während des Einlernprozesses ist der X-Y-Z-Bewegungsmechanismus jedoch eingekoppelt, so daß eine Handverfahrung ausgeschlossen ist.

Die Bewegung des X-Y-Z-Bewegungsmechanismusses ausschließlich über einen elektrischen Antrieb während des Einlernprozesses erhöht die Genauigkeit der Verfahrung des Schweißkopfes außerordentlich. Eine schwingungsfrei, gleichmäßige Verfahrung des Schweißkopfes ist die Folge.

Zweckmäßigerweise ist der Schweißautomat so ausgebildet, daß die Steuereinrichtung in Abhängigkeit von der Amplitude der von den Sensoren abgegebenen Signale die Geschwindigkeit der einzelnen Motoren einstellt. Dies hat den entscheidenden Vorteil, daß mit zunehmendem Druck durch die Hand der Bedienperson auf den Handgriff eine beschleunigte Verfahrung des X-Y-Z-Mechanismusses entsprechend der ausgeübten Druckrichtung möglich ist. Hierdurch wird das Gefühl bei der Bedienperson verstärkt, daß er selbst durch seinen ausgeübten Druck den X-Y-Z-Bewegungsmechanismus verschiebt, was jedoch nicht der Fall ist. Vielmehr wird allein durch das Ausgangssignal der Sensoren die Steuereinrichtung dazu veranlaßt den einen oder anderen der Motoren schneller oder langsamer laufenzulassen.

Mit dem erfindungsgemäßen Schweißautomaten wird damit eine Art "Servosteuerung" für den X-Y-Z-Bewegungsmechanismus bereitgestellt. Ohne diesen "Servoantrieb" würde die Bedienperson die sehr schwere und voluminöse X-Y-Z-Bewegungseinrichtung nur mit starker Kraftbeanspruchung bewegen können, was einer hochpräzisen Schweißung und den damit verbunden hochpräzisen Schweißnähten zuwiderläuft.

In einer Weiterbildung der Erfindung ist der Handgriff mindestens annähernd kastenförmig ausgebildet, und weist an jeder seiner Wände jeweils einen eigenen Sensor auf. Diese Sensoren können beispielsweise Drucksensoren sein.

In einer zweckmäßigen Weiterbildung der Erfindung ist der Schweißkopf des Schweißautomatens eine Schweißbrennerdüse, so daß der Schweißautomat für ein Gasschmelzschweißen einsetzbar ist. Es wäre jedoch auch denkbar, anstelle einer Schweißbrennerdüse einen Elektrodenschweißkopf vorzusehen. Hierbei ist es jedoch notwendig, daß die abschmelzende Metallelektrode immer wieder auf das Werkstück nachgeführt wird. Unabhängig von der Ausbildung des Schweißkopfes sitzt dieser auf einem A-B-C-Bewegungsmechanismus, der bis auf die Tatsache, daß er an den X-Y-Z-Bewegungsmechanismus angekoppelt ist, von diesen unabhängig bewegt werden kann.

In einer Weiterbildung der Erfindung weist der X-Y-Z-Bewegungsmechanismus zwei über der Grundplatte, die vorzugsweise ein auf Standbeinen stehender Arbeitstisch ist, sitzende Bewegungsschlitten auf, durch welche der Schweißkopf in X- und Y-Richtung bewegbar ist. Die beiden Bewegungsschlitten stehen mit ihren parallel zueinanderverlaufen Schienen orthogonal zueinander und sind zweckmäßigerweise nahezu in der gleichen Ebene angeordnet. Von diesen beiden Bewegungsschlitten führt in Z-Richtung ein Halterohr in Richtung Arbeitstisch. Am Ende dieses Halterohrs ist der A-B-C-Bewegungsmechanismus für den Schweißkopf angebracht. Die Leitungszuführung zu dem A-B-C-Bewegungsmechanismus des Schweißkopfes, also zu den dort befindlichen Sensoren und Antriebsaggregaten, erfolgt vorteilhafterweise durch das hohle Halterohr, das in Z-Richtung ausgerichtet ist.

Damit eine Drehung um 360° des Schweißkopfes durchführbar ist, ist am oberen Ende des in Z-Richtung angeordneten Halterohres eine Halteplatte angeordnet, die selbst um 360° bewegbar ist und über ein innerhalb des Halterohres angeordnetes Verbindungsglied mit dem Schweißkopf in Verbindung steht. Dieser erwähnten Halteplatte wird über einen am oberen Ende eines Arbeitsschrankes des Schweißautomatens angebrachten Kabelgalgen das Zuführungskabel zugeführt.

Gemäß einer vorteilhaften Ausführungsform der Erfindung ist der Schweißautomat für den Einlernprozeß der Steuerroutine, die maßgebend für nachfolgende, selbsttätige Schweißvorgänge ist, mit einer Zweihandbedienung versehen. Hierbei ist der oben erwähnte Handgriff mit den integrierten Sensoren von einer Hand und der Schweißkopf des Schweißautomatens von einer anderen Hand der Bedienperson zu greifen.

Die Bedienperson greift also beispielsweise mit der linken Hand den Handgriff und verfährt die X-Y-Z-Bewegungseinrichtung durch Drücken des Handgriffs in die gewünschte Richtung, wodurch der Schweißkopf des Schweißautomatens in entsprechende Richtungen größere Distanzen zurücklegt. Mit der rechten Hand greift die Bedienperson dagegen den Schweißkopf selbst und verschwenkt diesen so, daß am Werkstück die gewünschte Schweißnaht vollzogen werden kann. Dies sind verhältnismäßig kleine und kurze Bewegungen, die von Sensoren an den A-B-C-Bewegungsmechanismus erfaßt und an die Steuereinrichtung weitergeleitet werden. Nachdem das Probewerkstück fertig von Hand mit dem Schweißautomaten geschweißt und der Einlernprozeß abgeschlossen ist, ruft die Steuereinrichtung die zuvor eingelernten Bewegungsabläufe der X-Y-Z-Bewegungseinrichtung und A-B-C-Bewegungseinrichtung aus der Speichereinrichtung ab und führt den exakt gleichen Bewegungsvorgang selbsttätig nachfolgend durch.

Der Schweißautomat nach der Erfindung wird beispielhaft nachfolgend in Zusammenhang mit vier Figuren näher erläutert. Es zeigen:
- Fig. 1: Einen Schweißautomaten nach der Erfindung in Draufsicht von vorn,
- Fig. 2: den Schweißautomaten von Fig. 1 in seitlicher Draufsicht,
- Fig. 3: eine schematische Darstellung des Handgriffs des Schweißautomatens von Fig. 1 bzw. Fig. 2, und
- Fig. 4: ein schematisches Blockschaltbild der den Schweißautomaten der Fig. 1 bzw. 2 steuernden Steuereinrichtung.

In den nachfolgenden Figuren bezeichnen, sofern nicht anders angegeben, gleiche Bezugszeichen gleiche Teile mit gleicher Bedeutung.

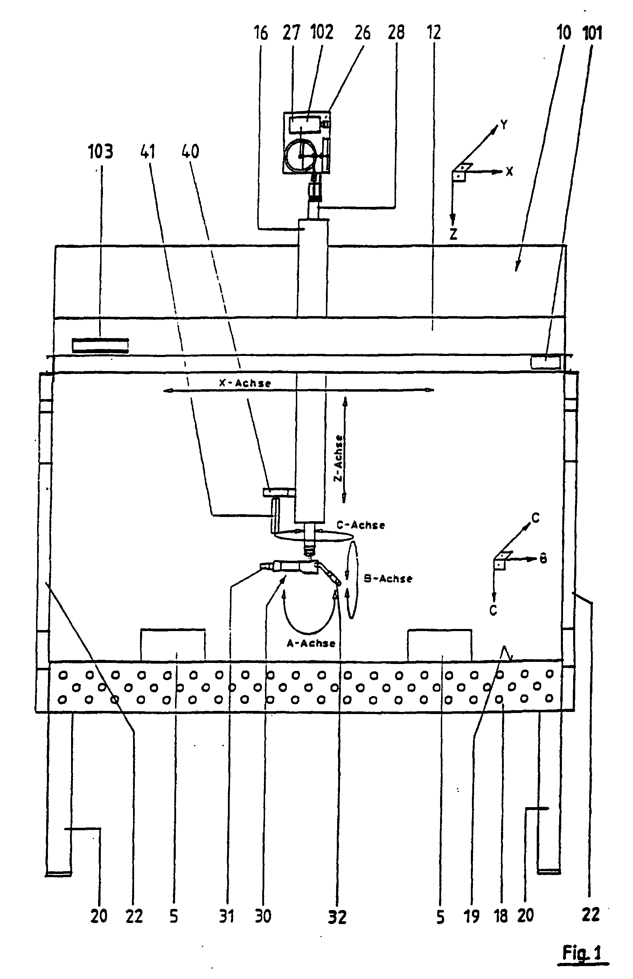

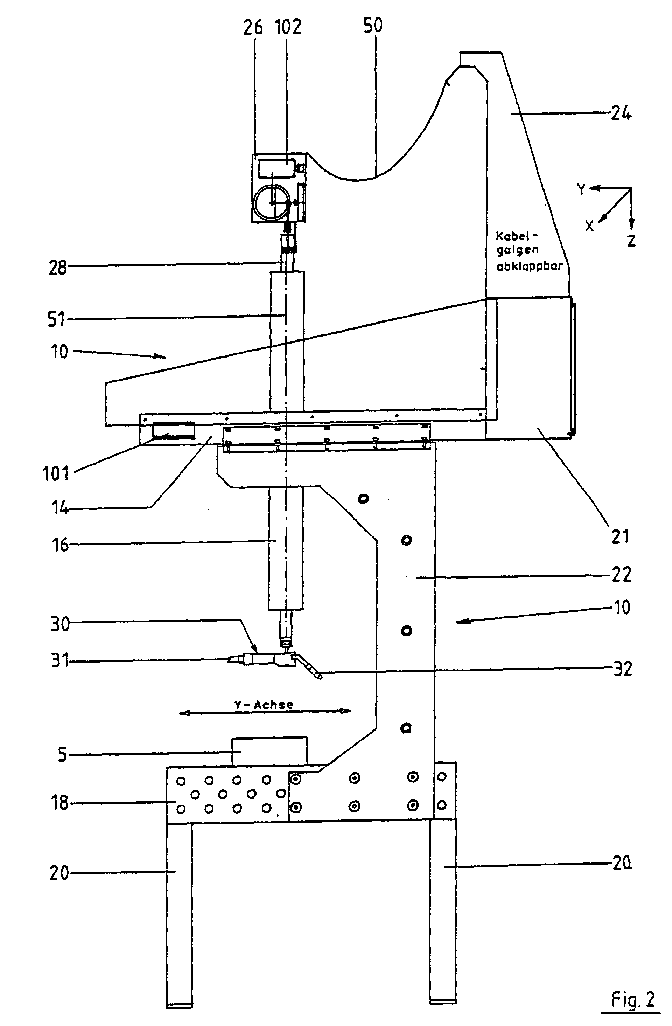

Das in Fig. 1 dargestellte Ausführungsbeispiel eines Schweißautomatens zeigt einen Arbeitsschrank 10 in Draufsicht von vorn. Der Arbeitsschrank 10 besteht im Wesentlichen aus einem Arbeitstisch 18, auf dessen Arbeitsfläche 19 zu schweißende Werkstücke 5 aufliegen. Der Arbeitstisch 18 steht auf Standbeinen 20. Links und rechts am Ende des Arbeitstisches 18 erstrecken sich Seitenwände 22 nach oben, die wie die Seitenansicht von Fig. 2 erkennen läßt, an den Arbeitstisch 18 seitlich angeschraubt sind. Die Seitenwände 22 weisen annähernd eine u-förmige Gestalt auf. Der eine Längsschenkel dieses u-förmigen Seitenteiles 22 ist seitlich an dem Arbeitstisch 18 angeschraubt, während der andere Längsschenkel des u-förmigen Seitenteiles 22 an ein oberes Schienenteil angeschraubt ist. Das gleiche gilt für das gegenüberliegende Seitenteil 22. Beabstandet und parallel zur Arbeitsfläche 19 des Arbeitstische 18 sind zwei orthogonal zueinander angeordnete X-Schlitten 12 und Y-Schlitten 14 mit jeweils zwei parallel zueinanderliegenden Schienen angeordnet. Auf diesen beiden Schlitten 12, 14 läuft ein Halterohr 16, das in Z-Richtung verfahrbar ist.

An dem dem Arbeitstisch 18 zugewandten Ende des Halterohres 16 sitzt ein Schweißkopf 30, der im vorliegenden Ausführungsbeispiel als Schweißbrenner gestaltet ist. Dieser Schweißbrenner 30 weist eine Schweißbrennerdüse 31 und eine Anschlußleitung 32 zum Zuführen des Schweißgases auf. Der gesamte Schweißkopf 30 ist selbst wiederum um drei Achsen bewegbar, hier die A-Achse, die B-Achse und die C-Achse, wie zusätzlich die in Fig. 1 dargestellten Pfeile verdeutlichen. Der gesamte Schweißkopf samt A-B-C-Bewegungsmechanismus ist an einer Verstellstange 28, die in Z-Richtung verfahrbar ist, montiert.

An dem dem Schweißkopf gegenüberliegenden Ende der Verstellstange 28 bzw. des Halterohres 16 ist eine Halteplatte 26 angeordnet, auf der ein Motor 102 für die Z-Verstellung der Verstellstange 28 angeordnet ist. Zusätzlich kann auf dieser Halteplatte 26 weitere Elektronik untergebracht sein. Die Verstellung des Halterohres 16 in Y- und X-Richtung erfolgt durch die in Fig. 1 lediglich schematisch dargestellten Motoren 101 und 103.

Die Motoren 101, 102 und 103 sind jeweils mit selbsthemmenden Getrieben gekoppelt, die es für eine Bedienperson unmöglich machen, den X-Y-Z-Bewegungsmechanismus von Hand zu bewegen.

Zweckmäßigerweise ist in dem Schweißautomaten jedoch eine nicht dargestellte Kupplungsvorrichtung eingebaut, die es in Störfällen ermöglicht, den X-Y-Z-Bewegungsmechanismus doch von Hand zu bewegen. Bei ordnungsgemäßem X-Y-Z-Bewegungsmechanismus ist eine solche Handbewegung jedoch ausgeschlossen. Vielmehr ist ausschließlich eine Bewegung in X-,Y- oder Z-Richtung nur durch Bestromung der hierfür vorgesehenen Motoren 101, 102 und 103 möglich.

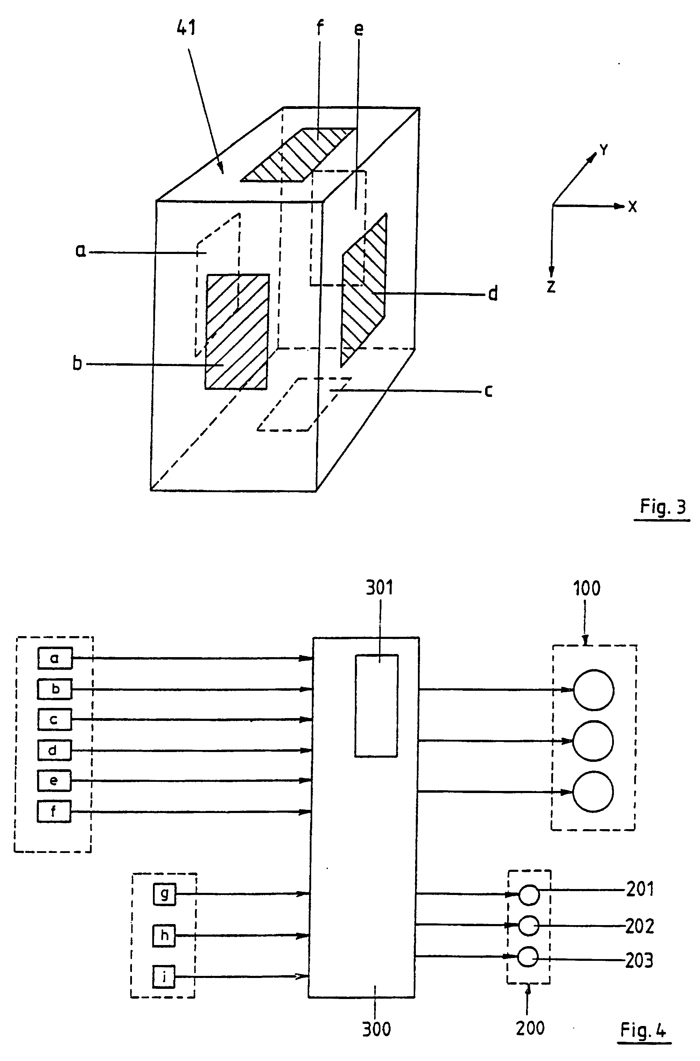

Wie aus Fig. 1 deutlich erkennbar, sitzt am vorderen Ende der Haltestange 16 ein Handgriff 41, der feststehend über eine Halterung 40 an dem Halterohr 16 befestigt ist. Dieser Handgriff 41 kann eine mindestens annähernd kastenförmige Struktur aufweisen und ist in seinem Inneren mit Sensoren versehen, wie die schematische Zeichnung von Fig. 3 zeigt.

Dort ist der mit dem Bezugszeichen 41 bezeichnete Handgriff tatsächlich kastenförmig gestaltet und weist an jeder seiner Wände jeweils einen eigenen Sensor a, b, c, d, e und f , hier einen Drucksensor, auf. Umgreift eine Bedienperson diesen Handgriff 41 und drückt diesen beispielsweise in Y-Richtung nach hinten, so wird dies von dem Drucksensor b erfaßt. Da sämtliche Sensoren a, b, c, d, e und f mit der Steuereinrichtung in Verbindung stehen, weiß die Steuereinrichtung, daß die Bedienperson eine Bewegung des X-Y-Z-Bewegungsmechanismusses in Y-Richtung wünscht. Die Steuereinrichtung generiert entsprechende Steuersignale für den Antriebsmotor 101, der für eine Bewegung in Y-Richtung verantwortlich ist. Für die anderen Motoren gilt das Entsprechende.

Die Steuereinrichtung wertet zusätzlich die Amplitude der von den Sensoren a..f kommenden Signale aus und veranlaßt die Motoren 101, 102, 103 entsprechend der detektierten Amplitude einen schnelleren oder langsameren Lauf des entsprechenden Motors. Dies führt dazu, daß die Bedienperson bei einem kräftigeren Drücken in eine vorgegebene Richtung eine schnellere Bewegung des X-Y-Z-Bewegungsmechanismus in die entsprechende Richtung hervorruft. Dies erhöht bei der Bedienperson den Eindruck, daß durch das eigene Drücken direkt der X-Y-Z-Bewegungsmechanismus in Gang gesetzt und verschoben wird und dies ohne Zwischenschaltung einer Elektronik, was jedoch nicht der Fall ist. Die Steuereinrichtung dient samt den Motoren und den Sensoreinrichtungen als Servoantrieb für den X-Y-Z-Bewegungsmechanismus.

Die Motoren 101, 102 und 103 sind über ein selbsthemmendes Getriebe, vorzugsweise ein selbsthemmendes Schneckengetriebe mit einer Untersetzung von z. B. 1:40 an die jeweilige Verstelleinrichtung, z. B. Verstellstangen bzw. Verstellketten, angekoppelt. Diese selbsthemmenden Getriebe sorgen dafür, daß der X-Y-Z-Bewegungsmechanismusses bis auf den erwähnten Störfall nicht manuell bewegbar ist.

In Fig. 4 ist ein sehr schematisches Blockschaltbild des erfindungsgemäßen Schweißautomatens gezeigt. Die Steuereinrichtung ist mit dem Bezugszeichen 300 versehen. An die Steuereinrichtung 300 ist der X-Y-Z-Bewegungsmechanismus 100 mit seinen Motoren 101, 102 und 103 geschaltet. Steuersignale der Steuereinrichtung 300 sorgen dafür, daß die Motoren 101, 102 und 103 mit einer vorgegebenen Geschwindigkeit in vorgegebene Richtungen drehen. Maßgebend für diese Drehung der Motoren 101, 102, 103 sind Ausgangssignale der Sensoren a, b, c, d, e, f im Falle des Einlernprozesses. Nach dem erfolgten Einlernprozeß bzw. "Teach-In" sind die von den Sensoren a..f ausgegangenen Signale in einer Speichereinrichtung 301 der Steuereinrichtung 300 abgespeichert. Nach einem erfolgten Einlernprozeß für den Schweißvorgang erfolgen die anschließenden Schweißvorgänge automatisch durch Abrufen der in der Speichereinrichtung 301 der Steuereinrichtung 300 abgespeicherten Daten.

Die Ansteuerung des A-B-C-Bewegungsmechanismusses 200 erfolgt in ähnlicher Weise. Antriebsmotoren 201, 202, 203 sorgen für eine Bewegung, vorzugsweise eine Drehbewegung um die A-Achse, B-Achse und C-Achse. Die einzelnen Achsen A, B und C sind mit geeigneten Drehgebern g, h, i gekoppelt. Diese Drehgeber g, h, i sind ebenfalls an die Steuereinrichtung 300 geschaltet. Während der Einlernphase nehmen diese Drehgeber g, h, i die Bewegung des Schweißkopfes, der von der Bedienperson beispielsweise mit der rechten Hand bewegt wird, auf. Die Daten der Drehgeber g, h und i werden wiederum in der Speichereinrichtung 301 der Steuereinrichtung 300 gespeichert und beim anschließenden, automatischen Schweißvorgang aus dieser Speichereinrichtung 301 abgerufen zur Ansteuerung der Motoren 201, 202, 203.

Der in den Fig. 1 und 2 dargestellte Schweißautomat wird für den automatischen Schweißvorgang auf folgende Art und Weise bedient.

Zunächst umgreift eine Bedienperson mit der linken Hand den Handgriff 41 und mit der rechten Hand den Schweißbrenner 30. Das zu schweißende Werkstück 5 ist dabei bereits in der Position plaziert, in der es geschweißt werden soll. Die Steuereinrichtung ist auf Programmiermodus geschaltet und der manuelle Schweißvorgang beginnt. Die Bedienperson drückt mit der linken Hand 41 den Handgriff so, daß der X-Y-Z-Mechanismus durch die hervorgerufene Bestromung der einzelnen Motoren 101, 102, 103 in die gewünschte Position gelangt. Mit der rechten Hand bewegt die Bedienperson den Schweißbrenner 30 so, daß die Schweißbrennerdüse 31 die erforderlichen Schweißnähte am Werkstück 5 anbringt. Nachdem das eine Werkstück 5 fertiggeschweißt ist, kann die Bedienperson den X-Y-Z-Mechanismus zum nächsten auf dem Arbeitstisch 18 befindlichen Werkstück 5 durch entsprechende Betätigung des Handgriffs 41 verfahren und dort an dem weiteren Werkstück 5 einen erneuten Schweißvorgang durchführen. Nachdem die auf dem Arbeitstisch 18 befindlichen Werkstücke 5 fertiggeschweißt sind, ist der Programmiermodus beendet.

Anschließend schaltet die Bedienperson auf Automatikmodus, nimmt die fertig geschweißten Werkstücke 5 vom Arbeitstisch 18 und plaziert neue Werkstücke an den Positionen, an denen zuvor die anderen Werkstücke 5 lagen. Nach einem von der Bedienperson ausgelösten Startbefehl ruft die Steuereinrichtung 300 die zuvor im Einlernmodus gespeicherten Daten aus der Speichereinrichtung 301 ab und steuert die einzelnen Motoren 101, 102, 103 und 202, 201 und 203 so an, daß der selbsttätige Schweißvorgang durchgeführt wird.

Der Vollständigkeit halber ist mit Bezugnahme auf Fig. 2 noch nachzutragen, daß die Halteplatte 26 am oberen Ende des Halterohres 16 um 360° bewegbar ist. Mit der Bewegung der Halteplatte 26 um die eigene Achse dreht sich auch die im Halterohr 16 befindliche Verstellstange 28 entsprechend. Eine Bewegung des Schweißkopfes um die Z-Achse ist die Folge. Der an der oberen Seite des Arbeitstisches 10 befestigte Gehäuseteil- 21 setzt sich in einem Kabelgalgen 24, der vorzugsweise wegklappbar ist, fort. Dieser Kabelgalgen 24 dient dazu, die Zuführungsleitungen 50 beweglich zur Halteplatte 26 zuzuführen. Innerhalb des Halterohres 16 verlaufen zusätzlich noch Zuführungsleitungen 51 zu den in Fig. 2 der besseren Übersichtlichkeit wegen dargestellten Motoren und Winkelaufnehmern bzw. Drehgebern der A-B-C-Bewegungseinrichtung.

### Bezugszeichenliste

- 5: Werkstück
- 10: Arbeitsschrank
- 12: X-Schlitten
- 14: Y-Schlitten
- 16: Halterohr
- 18: Arbeitstisch
- 19: Arbeitsfläche
- 20: Standbeine
- 21: Gehäuseteil
- 22: Seitenteile
- 24: Kabelgalgen
- 26: Halteplatte
- 27: Motor
- 28: Verstellstange
- 30: Schweißbrenner
- 31: Schweißbrennerdüse
- 32: Anschlußleitung
- 40: Halterung
- 41: Handgriff
- 50, 51: Zuleitungen
- 100: X-Y-Z-Bewegungsmechanismus
- 101, 102, 103: Motoren
- 200: A-B-C-Bewegungsmechanismus
- 201, 202, 203: Motoren
- 300: Steuereinrichtung
- 301: Speichereinrichtung
- A, B, C: Achsen
- X, Y, Z: Achsen
- a, b, c, d, e, f: Drucksensoren
- g, h, i: Drehgeber

## Patentansprüche

1. Schweißautomat mit einer Grundplatte zur Ablage von zu schweißenden Werkstücken und mit einem in A-B-C-Richtung bewegbaren Schweißkopf einer Schweißvorrichtung, wobei der Schweißkopf an einen X-Y-Z-Bewegungsmechanismus gekoppelt ist zur selbsttätigen Bewegung des Schweißkopfes entlang der Werkstücke nach Maßgabe einer in einer Steuereinrichtung gespeicherten und durch einen vorausgegangenen Einlernprozeß ("Teach-In") vorgegebenen Steuerroutine, und wobei
der X-Y-Z-Bewegungsmechanismus (100) drei von jeweils einem Motor (101, 102, 103) antreibbare Linearbewegungseinrichtungen aufweist, **dadurch gekennzeichnet, daß** die Motoren (101, 102, 103) der X-Y-Z-Bewegungsmechanismus jeweils mit einem Selbsthemmgetriebe augestattet sind, daß an dem X-Y-Z-Bewegungsmechanismus (100) ein Handgriff (41) mit integrierten Sensoren (a..f) für eine Bedienperson vorgesehen ist, daß diese Sensoren (a..f) mit der Steuereinrichtung (300) gekoppelt sind, und daß die Motoren (101, 102, 103) des X-Y-Z-Bewegungsmechanismus (100) im Falle des Einlernprozesses ausschließlich nach Maßgabe von Ausgangssignalen der Sensoren (a..f) bewegbar sind.

2. Schweißautomat nach Anspruch 1,
**dadurch gekennzeichnet,daß** durch die Steuereinrichtung (300) die Geschwindigkeit der Motoren (101, 102, 103) nach Maßgabe der Amplitude der Sensoren (a..f) einstellbar ist.

3. Schweißautomat nach Anspruch 1 oder 2,
**dadurch gekennzeichnet, daß** der Handgriff (41) mindestens annähernd kastenförmig ausgebildet ist und an jeder seiner Wände jeweils einen eigenen Sensor (a..f) aufweist.

4. Schweißautomat nach einem der Ansprüche 1 bis 3,
**dadurch gekennzeichnet, daß** die Sensoren (a..f) Drucksensoren sind.

5. Schweißautomat nach einem der Ansprüche 1 bis 4,
**dadurch gekennzeichnet, daß** der Schweißkopf eine Schweißbrennerdüse (31) aufweist, die auf einem A-B-C-Bewegungsmechanismus (200) sitzt, daß dieser A-B-C-Bewegungsmechanismus (200) an den X-Y-Z-Bewegungsmechanismus (100) gekoppelt ist, und daß die beiden Bewegungsmechanismen (100, 200) voneinander unabhängig bewegbar sind.

6. Schweißautomat nach einem der Ansprüche 1 bis 5,
**dadurch gekennzeichnet, daß** der X-Y-Z-Bewegungsmechanismus (100) zwei über der Grundplatte (18) sitzende Bewegungsschlitten (12, 14) aufweist zur Bewegung des Schweißkopfes in X- und Y-Richtung.

7. Schweißautomat nach Anspruch 6,
**dadurch gekennzeichnet, daß** von den beiden Schlitten (12, 14) der X-Y-Z-Bewegungseinrichtung (100) ein in Z-Richtung weisendes Halterohr (16) mit endseitig angekoppelten Schweißkopf in Richtung Grundplatte angeordnet ist.

8. Schweißautomat nach Anspruch 6 oder 7,
**dadurch gekennzeichnet, daß** der Handgriff (41) am vorderen Ende des Halterohres (16) für die Z-Achse angeordnet ist.

9. Schweißautomat nach einem der Ansprüche 1 bis 8,
**dadurch gekennzeichnet, daß** die Grundplatte (18) ein Arbeitstisch ist, der auf Standbeinen (20) steht.

10. Schweißautomat nach einem der Ansprüche 1 bis 9,
**dadurch gekennzeichnet, daß** am oberen Ende eines Arbeitsschrankes (10) des Schweißautomatens ein Kabelgalgen (24) angeordnet ist, über welchen Zuführungskabel (50) an eine Halteplatte (26) geführt sind, daß diese Halteplatte (26) auf dem dem Schweißkopf abgewandten Ende des Halterohres (16) sitzt, und daß Zuführungsleitungen (51) durch das Halterohr (16) in Richtung Schweißkopf des Schweißautomatens geführt sind.

11. Schweißautomat nach einem der Ansprüche 1 bis 10,
**dadurch gekennzeichnet, daß** der Schweißautomat für den Einlernprozeß der Steuerroutine eine Zweihandbedienung vorsieht, wobei der Handgriff (41) von einer Hand und der Schweißkopf des Schweißautomatens von einer anderen Hand der Bedienperson greifbar ist.

12. Schweißautomat nach einem der Ansprüche 1 bis 11,
**dadurch gekennzeichnet, daß** die X-Y-Z-Bewegungseinrichtung (100) von Hand unverfahrbar ist.

## Claims

1. An automatic welding machine having a base plate for deposition of workpieces to be welded and having a welding device welding head movable in the A, B and C directions, the welding head being coupled to an X-Y-Z movement mechanism for automatic movement of the welding head along the workpieces in accordance with a control routine stored in a control device and predetermined by a preceding "teach-in" process, and the X-Y-Z movement mechanism (100) comprising three linear movement means each drivable by a motor (101, 102, 103), **characterised in that** the motors (101, 102, 103) of the X-Y-Z movement mechanism are each equipped with a self-locking gear, **in that** a handle (41) with integral sensors (a - f) is provided on the X-Y-Z movement mechanism (100) for an operator, **in that** these sensors (a - f) are coupled to the control means (300) and **in that** the motors (101, 102, 103) of the X-Y-Z movement mechanism (100) may be moved, in the case of the teach-in process, exclusively in accordance with output signals from the sensors (a - f).

2. An automatic welding machine according to claim 1,
**characterised in that** the speed of the motors (101, 102, 103) may be adjusted by the control means (300) in accordance with the amplitude of the sensors (a - f).

3. An automatic welding machine according to claim 1 or claim 2,
**characterised in that** the handle (41) is of at least approximately box-shaped construction and comprises a separate sensor (a - f) on each of its walls.

4. An automatic welding machine according to one of claims 1 to 3,
**characterised in that** the sensors (a - f) are pressure sensors.

5. An automatic welding machine according to one of claims 1 to 4,
**characterised in that** the welding head (31) comprises a welding torch nozzle (31) which is seated on an A-B-C movement mechanism (200), **in that** this A-B-C movement mechanism (200) is coupled to the X-Y-Z movement mechanism, and **in that** the two movement mechanisms (100, 200) may be moved independently of one another.

6. An automatic welding machine according to one of claims 1 to 5,
**characterised in that** the X-Y-Z movement mechanism (100) comprises two movement carriages (12, 14) seated above the base plate (18) for moving the welding head in the X and Y directions.

7. An automatic welding machine according to claim 6,
**characterised in that** from the two carriages (12, 14) of the X-Y-Z movement means (100) there is arranged a holding tube (16) pointing in the Z direction and having a welding head coupled thereto at the end in the direction of the base plate.

8. An automatic welding machine according to claim 6 or 7,
**characterised in that** the handle (41) is arranged at the front end of the holding tube (16) for the Z axis.

9. An automatic welding machine according to one of claims 1 to 8,
**characterised in that** the base plate (18) is a work bench, which stands on legs (20).

10. An automatic welding machine according to one of claims 1 to 9,
**characterised in that** a cable boom (24) is arranged at the upper end of a work cabinet (10) of the automatic welding machine, by means of which cable boom (24) feed cables (50) are guided to a holding plate (26), **in that** this holding plate (26) is seated on the end of the holding tube (16) remote from the welding head and **in that** feed lines (51) are guided through the holding tube (16) in the direction of the welding head of the automatic welding machine.

11. An automatic welding machine according to one of claims 1 to 10,
**characterised in that** the automatic welding machine provides two-handed operation for the teach-in process of the control routine, wherein the handle (41) may be gripped with one of the operator's hands and the welding head of the automatic welding machine with the other hand.

12. An automatic welding machine according to one of claims 1 to 11,
**characterised in that** the X-Y-Z movement means (100) cannot be displaced manually.

## Revendications

1. Machine automatique de soudage comportant une plaque de base pour recevoir les pièces à souder et une tête de soudage mobile dans les directions A, B, C, d'un dispositif de soudage, la tête de soudage étant couplée à un mécanisme d'entraînement en X, Y, Z pour déplacer automatiquement la tête de soudage le long de la pièce selon les indications d'une routine de commande prédéterminée par un procédé d'apprentissage antérieur et enregistré dans une installation de commande, et le mécanisme d'entrainement en X, Y, Z (100) comportant trois installations de déplacement linéaire, entraînées chacune par un moteur (101, 102, 103),
**caractérisée en ce que**
le mécanisme d'entraînement en X, Y, Z (100) comprend une poignée (41) intégrant des capteurs (a...f) pour un opérateur,
les capteurs (a...f) étant couplés à l'installation de commande (300), et
les moteurs (101, 102, 103) du mécanisme d'entraînement en X, Y, Z (100) étant uniquement déplacés en cas de procédé d'apprentissage, selon les indications du signal de sortie des capteurs (a...f).

2. Machine automatique de soudage selon la revendication 1,
**caractérisée en ce que**
l'installation de commande (300) règle la vitesse des moteurs (101, 102, 103) selon l'indication des amplitudes données par les capteurs (a...f).

3. Machine automatique de soudage selon les revendications 1 et 2,
**caractérisée en ce que**
la poignée (41) est réalisée au moins sensiblement en forme de caisson et chacune de ces parois comporte chaque fois un capteur propre (a...f).

4. Machine automatique de soudage selon l'une des revendications 1 à 3,
**caractérisée en ce que**
les capteurs (a...f) sont des capteurs de pression.

5. Machine automatique de soudage selon l'une des revendications 1 à 4,
**caractérisée en ce que**
la tête de soudage comporte une buse de chalumeau de soudage (31) qui est portée par un mécanisme d'entraînement A, B, C (200) et ce mécanisme d'entraînement A, B, C (200) est couplé au mécanisme d'entraînement en X, Y, Z (100) et les deux mécanismes de déplacement (100, 200) sont mobiles indépendamment l'un de l'autre.

6. Machine automatique de soudage selon l'une des revendications 1 à 5,
**caractérisée en ce que**
le mécanisme d'entraînement en X, Y, Z (100) comporte deux chariots (12, 14) au-dessus de la plaque de base (18) pour déplacer la tête de soudage dans les directions X et Y.

7. Machine automatique de soudage selon la revendication 6,
**caractérisée en ce que**
l'un des deux chariot (12, 14) de l'installation d'entraînement en X, Y, Z (100) comporte un tube de fixation (16) dirigé dans la direction Z avec une tête de soudage couplée à une extrémité, dans la direction de la plaque de base.

8. Machine automatique de soudage selon les revendications 6 ou 7,
**caractérisée en ce que**
la poignée (41) est prévue à l'extrémité avant du tube de fixation (16) de l'axe Z.

9. Machine automatique de soudage selon l'une des revendications 1 à 8,
**caractérisée en ce que**
la plaque de base (18) est une table de travail qui s'appuie sur des pieds (20).

10. Machine automatique de soudage selon l'une des revendications 1 à 9,
**caractérisée en ce que**
l'extrémité supérieure d'une armoire (10) de la machine automatique de soudage comporte une potence porte câble (24) pour guider le câble d'alimentation (50) sur la plaque de fixation (26),
cette plaque de fixation (26) est appuyée contre l'extrémité du tube de fixation (16) à l'opposé de la tête de soudage, et
les lignes d'alimentation (51) sont guidées par le tube de fixation (16) en direction de la tête de soudage de l'automate de soudage.

11. Machine automatique de soudage selon l'une des revendications 1 à 10,
**caractérisée en ce que**
l'automate de soudage comporte une commande à deux mains pour le procédé d'apprentissage de la routine de commande, la poignée (41) pouvant être prise par la main et la tête de soudage de l'automate de soudage par l'autre main de l'opérateur.

12. Machine automatique de soudage selon l'une des revendications 1 à 11,
**caractérisée en ce que**
l'installation d'entraînement en X, Y, Z (100) est indéplaçable à la main.
